# EUROPÄISCHE PATENTSCHRIFT

(11) **EP 1 536 328 B1**
(45) Veröffentlichungstag und Bekanntmachung des Hinweises auf die Patenterteilung: **29.07.2009**
(21) Anmeldenummer: 04026221.4
(22) Anmeldetag: 04.11.2004
(51) Int. Cl.: G06F 9/44

(54) **Datenverarbeitungssystem mit automatisierbarer Verwaltung und Verfahren zur automatisierten Verwaltung eines Datenverarbeitungssystems**
Data processing system with automatable management and method for automated management of a data processing system
Système de traitement de données avec la gestion automatisable et procédé pour la gestion automatisée d'un système de traitement de données

(30) Priorität: 25.11.2003 DE 10354938
(43) Veröffentlichungstag der Anmeldung: 01.06.2005
(73) Patentinhaber: Fujitsu Siemens Computers GmbH, 80807 München (DE)
(72) Erfinder: Hartung, Klaus, 33154 Salzkotten (DE)
(74) Vertreter: Epping - Hermann - Fischer

(56) Entgegenhaltungen:
- EP-A- 1 079 318
- WO-A-03/024025

## Beschreibung

Die Erfindung betrifft ein Datenverarbeitungssystem mit einer Vielzahl von Hardware- und Softwarekomponenten, wobei die Komponenten durch endliche Automaten steuerbar sind. Zudem betrifft die Erfindung ein Verfahren zur Steuerung eines Datenverarbeitungssystems mit einer Vielzahl von Hardware- und Softwarekomponenten, bei dem die Komponenten durch endliche Automaten steuerbar sind.

Der Ursprung dieser Erfindung liegt im Bereich der Steuerung großer Datenverarbeitungssysteme, insbesondere von Serverfarmen, und zwar mit Hinblick auf deren Verwaltung und deren Ausfallsicherheit. Dabei wird ist mit dem Begriff Verwaltung das Einrichten der Maschine, d.h. deren Installation und das An- und Abschalten gemeint. Ereignisse in dieser Welt sind etwa das Hinzufügen einer neuen Maschine, beispielsweise eines neuen Blade Servers, der Ausfall einer Maschine, eine Überlastmeldung oder eine Unterlastmeldung.

Einzelne Hardware- oder Softwarekomponenten des Datenverarbeitungssystems werden durch endliche Automaten gesteuert, die auch als Zustandsautomaten oder englisch Finite Automaton bezeichnet werden.

### Grundbegriffe

Endliche Automaten sind in der Steuerung von Prozessen allgegenwärtig. Sie bestehen im wesentlichen aus einer Maschinentafel, wobei jeder Eintrag ein Tupel ist bestehend aus:
- altem Zustand,
- Ereignis,
- neuem Zustand und
- Aktion.

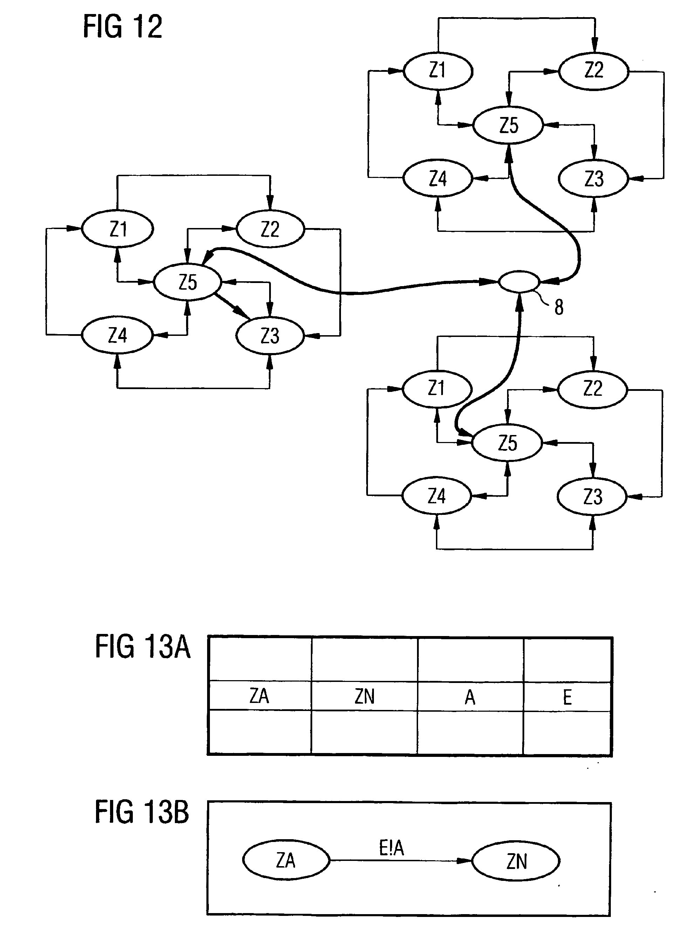

Dabei sind die Maschinentafeln fest vorgegeben. Diese Maschinentafeln sind auch als Graph darstellbar. Daher werden im Folgenden die Begriffe endlicher Automat oder Graph gleichbedeutend gebraucht, je nachdem, was passender erscheint. Die Figur 13A zeigt eine Maschinentafel mit einer ausgezeichneten Zeile. Der alte Zustand ZA wird beim Eintreffen des Ereignisses E unter Ausführung der Aktion A in den neuen Zustand ZN überführt. Dieselbe Bedeutung hat der in Figur 13B stehende erste Graph mit der an der Kante angegebenen verkürzten Schreibweise.

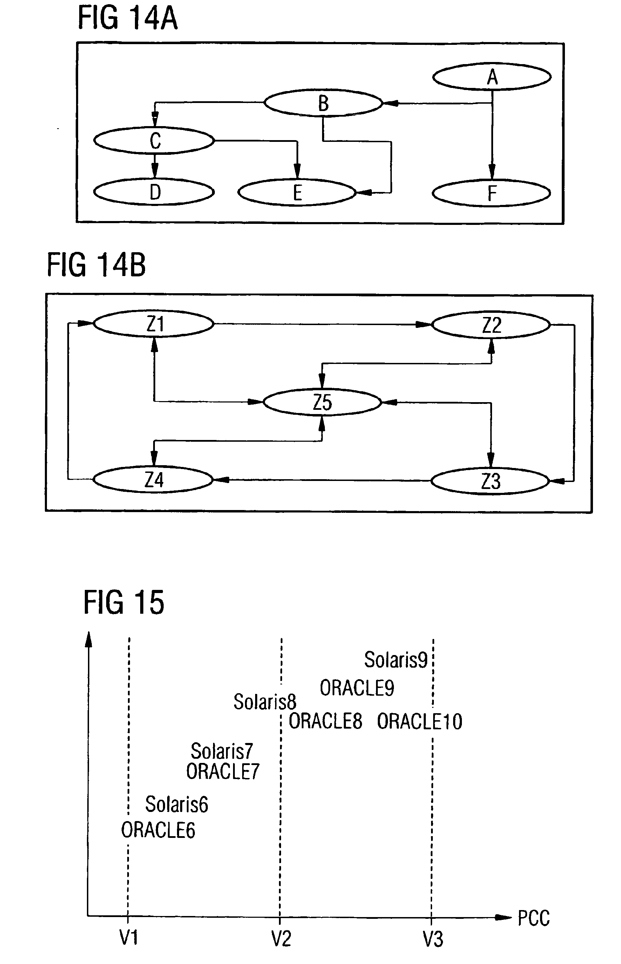

Je nachdem, welche Bedeutung der endliche Automat haben soll, werden Einschränkungen auf der Menge der Knoten und Kanten definiert sein. So unterscheidet man beispielsweise häufig zwischen Abhängigkeitsgraphen in Figur 14A und Zustandsgraphen Figur 14B. Im Abhängigkeitsgraphen sind die Knoten D und E direkt von C abhängig. Die Richtung der Kanten zeigt die Abhängigkeit an. Solche Graphen können/dürfen keine Zyklen enthalten. Bekannte Cluster Manager, also Programme zur Steuerung eines Verbundes mehrerer Rechner, arbeiten mit Abhängigkeitsgraphen. Dann sind die Menge der Zustände fest definiert, also beispielsweise Online oder Offline, und auch die Ereignisse sind fest vorgegeben und werden über die Sensoren angeliefert.

Zur Lösung eines komplexen Problems, hier die Verwaltung eines großen Datenverarbeitungssystems, wird es zunächst in Teile zerlegt, die mit endlichen Automaten lösbar sind. Je komplexer das Problem ist, desto mehr endliche Automaten ergeben sich und um so mehr Aufwand muß in die Konfiguration der endlichen Automaten sowie in ihre Verwaltung gesteckt werden.

### Stand der Technik

Bisherige Lösungen zur Verwaltung großer Datenverarbeitungssysteme basieren auf der persönlichen Tätigkeit eines Administrators. Im einfachsten Fall hilft eine Software, sogenannte SNMP Manager, beim Darstellen von Ereignissen und Zuständen des Datenverarbeitungssystems. Sie dienen im Wesentlichen der klaren Darstellung des Problems. Der Verwalter einer Serverfarm ist im Grunde ein "endlicher Automat", der alles manuell regelt.

Als weitere Stufe der Vereinfachung der Verwaltung werden Abhängigkeitsgraphen eingesetzt, um komplexe Arbeitsschritte zu strukturieren und damit deren Ablauf automatisch steuerbar zu machen. Implementiert sind die Abhängigkeitsgraphen in den sogenannten Cluster Managern, die die Hochverfügbarkeit anvertrauter Dienste garantieren. Dies ist heute eine weit verbreitete Art der Verwaltung von Datenverarbeitungssystemen. Dabei entsteht ein geschlossener Regelkreis durch Sensoren, die die zu steuernden Prozesse überwachen und Veränderungen an den Cluster Manager melden. Dieser Regelkreis ist wichtig und bleibt in dieser Form auch bei der unten dargestellten erfindungsgemäßen Lösung erhalten.

Das Dokument WO-A-03/024025 offenbart ein Verfahren zum Aushandeln von Parametern in einem verteilten Rechennetzwerk. Für jede Instanz eines Dienstes wird ein endlicher Automat gestartet, der mit dem Dienst verknüpft ist. Die endlichen Automaten tauschen Nachrichten aus, welche Konfigurationsdaten beinhalten. Dabei erfolgen Zustandsänderungen, solange, bis ein Endzustand erreicht ist. Nach dieser schrittweisen Konfiguration wird der Dienst verfügbar gemacht.

### Problem der Versionsvielfalt

Allerdings haben die Cluster Manager auch eine ganze Reihe von Nachteilen. Ein erstes Problem entsteht durch die Versionsvielfalt und Beeinträchtigungen andere Programme. Die Cluster Manager kommen auf jeder Maschine zusammen mit den Diensten, die sie überwachen müssen, zum Einsatz. Damit kann sich im schlechtesten Fall eine gegenseitige Beeinflussung ergeben, durch die eine in jeder Betriebssituation ordnungsgemäße Clustersteuerung beeinträchtigt werden kann. Mit anderen Worten hat sich der Cluster Manager an die Spielregeln innerhalb der Maschine zu halten, die von den Anwendungen, die dort laufen, vorgegeben sind. Das betrifft insbesondere auch die Software-Landschaft auf diesen Maschinen. Damit sind die Cluster Manager direkt der rasanten Weiterentwicklung der Maschinen und Betriebssysteme unterworfen und müssen ständig überarbeitet werden im Hinblick auf neue/geänderte Funktionen in den Betriebssystemen und neuen Version der Dienste. Zur Veranschaulichung dieses Problems zeigt die Figur 15 eine fiktive, aber daher einfache Verschachtelung von SOLARIS- und ORACLE-Freigabeterminen. In der Realität sind die Schachtelungen weit komplexer und erfordern seitens des Herstellers von Cluster Managern immer mehr Aufwand um mit dem Fortschritt mithalten zu können.

### Problem der Komplexität

Ein weiteres Problem ist die Komplexität der Vorgänge in einem Cluster mit mehreren Knoten. Cluster Manager haben eine verteilte Intelligenz, weil jede Maschine über einen eigenständigen Cluster Manager verfügt, der im schlimmsten Fall selbständig handeln kann. Diese Verteilung der Intelligenz auf viele Maschine führt zu sehr komplexen Verfahren in der Clustersoftware selbst, zum Beispiel die Lösung des Split-Brain Syndroms. Im Grunde ist der praktische Einsatz von Cluster Managern auf nur wenige Maschinen pro Cluster beschränkt. Erfahrungsgemäß ist sogar die überwiegende Zahl von Maschinen pro Cluster gleich zwei.

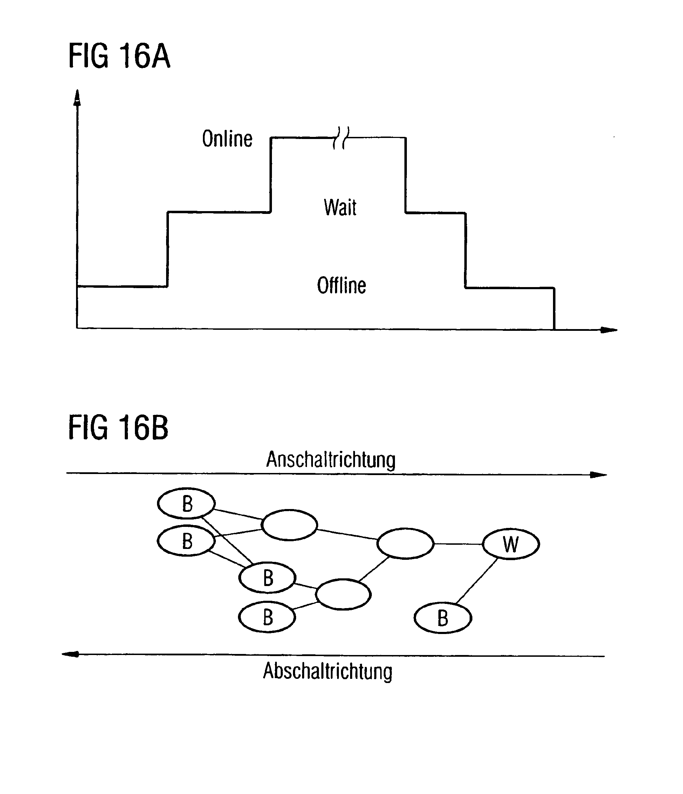

Die Abhängigkeitsgraphen in den Cluster Managern haben eine feste Bedeutung. Das Durchlaufen des Graphen ist fest definiert (vgl. Figur 16B). Die Bereitstellung eines Dienstes vollzieht sich von Blattknoten B zum Wurzelknoten W und die Abschaltung umgekehrt. Als Funktion über die Zeit betrachtet ergibt sich eine Art Treppe (Figur 16A). Es gibt keine Möglichkeit, einen Teilgraphen mehrfach zu durchlaufen. Die stabilen Zustände des Wurzelknoten sind entscheidend, entweder bereit oder nicht bereit. Als besondere Einschränkung ist hervorzuheben, daß die Anzahl gleichzeitiger Zustandsübergänge in einem Graph stark begrenzt ist und im schlimmsten Fall nur auf ein Ereignis zu einer Zeit reagiert werden kann. Zwischen den beiden stabilen Zuständen gibt es keinen anderen Weg als über dieselbe 'Treppe' (Figur 16A). Dabei sind jedesmal alle Knoten betroffen, Abkürzungen gibt es nicht.

### Problem der gleichzeitigen Ereignisse

Es gibt inaktive Zustände, wo das Eintreffen von Ereignissen nicht bearbeitet wird. Das bedeutet leider auch, daß Cluster Manager nicht immer automatisch erkennen, wenn 'ihr' Dienst verfügbar ist, ohne daß es dem Cluster Manager angekündigt wurde.

### Problem der Konfiguration

Neue Dienste eines neuen oder eines bekannten Typs müssen immer manuell von einem Systemverwalter konfiguriert werden. Die Graphen der Cluster Manager beinhalten dazu Daten, die auf die Konfiguration des Clusters abgestimmt sind. Entsprechend groß ist der Aufwand, die Graphen des Cluster Managers an eine geänderte Konfiguration anzupassen. Die automatische Anpassung ist nicht möglich, insbesondere kann sich die Clustersoftware nicht selbst rekonfigurieren. Das Verwalten der Dienste beziehungsweise der Anwendungen, also beispielsweise das Starten oder Stoppen, ist immer den Cluster Managern untergeordnet. Zunächst muß der Cluster Manager informiert werden, weil sonst Aktion gestartet werden, die unnötig sind, beispielsweise weil der Dienst absichtlich gestoppt wurde. Aktionen eines Systemverwalters, die direkt auf einen Dienst oder eine Anwendung wirken, können zu Störungen im System führen, weil der Cluster Manager die Änderung detektiert und dabei von einem Fehler ausgeht und gegebenenfalls Gegenmaßnahmen ergreift.

Insbesondere sind die Cluster Manager bzw. die Graphen sehr anfällig für Änderungen in der Konfiguration der Dienste. Eine Änderung eines Dienstes kann dazu führen, daß geplante Maßnahmen des Cluster Managers in Leere laufen bzw. nicht umgesetzt werden können.

Bei 'zweckfremden' Einsatz in Serverfarmen müssen oft künstlich Abhängigkeiten zwischen Maschinen gefunden werden, die naturgemäß nicht bestehen, weil die Cluster Manager nur Abhängigkeitsgraphen bereitstellen.

Die Knotentypen der Abhängigkeitsgraphen selbst sind auf wenige Typen begrenzt, in der Regel UND- und ODER-Knoten. Damit ist keine komplexe Knotenintelligenz machbar und die Graphen für große Szenarien werden sehr unübersichtlich. Außerdem ergeben sich aus der Bedeutung der Graphen Auswirkungen auf den Aufbau:
- es muß ein Wurzelknoten definiert werden,
- es gibt keine Zyklen,
- Blattknoten müssen vorhanden sein und haben eine wohldefinierte Aufgabe,
- einzelnen Ebenen des Abhängigkeitsgraphen sind festen Knotentypen zugeordnet, zum Beispiel die Sohn-Knoten der Wurzel.

Die Weiterentwicklung von Serverfarmen im Hinblick auf Virtualisierungskonzepte für Daten und Maschinen macht vieles in Cluster Managern überflüssig. So wird beispielsweise die komplizierte Behandlung von mountpoints völlig unnötig, wenn Serverfarmen mit mittels NAS gekoppelten Plattensystemen arbeiten. Die Vereinfachung ergibt sich dann, wenn man kein komplexes Verfahren mehr braucht, um beispielsweise Betriebsmittel genau einmal und nicht öfter pro Cluster bereitzustellen, zum Beispiel mountpoints.

### Schritte zur Vereinfachung der Verwaltung

In großen Serverfarmen kommt oft SNMP (Simple Network Management Protocol) als 'Ereignisträger' zum Einsatz. Dies soll zwar die Verwaltung der Serverfarmen vereinfachen, allerdings ergibt sich auch ein neues Problem, nämlich daß Ereignisse nicht immer gemeldet werden, sich überholen können oder viel zu spät eintreffen. Graphen müssen im Grunde fest sein. Jede denkbare Situation, das heißt jede denkbare Kombination von Ereignis und Zustand muß vorkommen. Das führt zu Graphen, die sehr komplex und damit schwer beherrschbar sind. Das ist meistens der Grund dafür, andere Lösungen zu suchen. Fazit ist, daß große Serverfarmen zu komplex sind, um noch überschaubar, mittels einfacher Automaten erweiterbar oder beherrschbar zu sein.

### Konsequenzen für Datenverarbeitungssystem nach dem Stand der Technik

Dies alles führt dazu, daß große Serverfarmen manuell verwaltet werden müssen, was die Firmen vor immer größere Probleme stellt. Selbst wenn man jeder Maschine fest sozusagen einen Verwaltungsautomaten zuordnet, wäre der immer noch manuell mit den jeweiligen Daten zu versehen, z.B. der Internetadresse, bevor er gestartet werden. Erweiterungen und Verkleinerungen des Maschinenparks können damit nicht automatisch durchgeführt werden. Das gilt insbesondere, wenn unter Hochlastbedingungen neue Maschinen in Betrieb genommen werden müssen.

### Aufgabe der Erfindung

Aufgabe der Erfindung ist es daher, ein Datenverarbeitungssystem anzugeben, das eine flexible Verwaltung und insbesondere einen höheren Automatisierungsgrad ermöglicht. Ebenso soll ein Verfahren angegeben werden, mit dem die Verwaltung eines Datenverarbeitungssystems automatisierbar ist.

### Lösung der Aufgabe

Diese Aufgabe wird erfindungsgemäß durch ein Datenverarbeitungssystems mit einer Vielzahl von Hardware- und Softwarekomponenten, wobei die Komponenten durch endliche Automaten steuerbar sind, gelöst, das dadurch gekennzeichnet ist, daß
- mindestens ein endlicher Musterautomat definiert ist, der zur Steuerung und Überwachung vorbestimmter Komponententypen geeignet ist, wobei für die Steuerung einer Komponente auf der Basis des oder der definierten Musterautomaten in Verbindung mit komponentenspezifischen Parametern endliche Automaten konfigurierbar sind,
- eine ereignisgesteuerte Automatensteuerkomponente vorgesehen ist, die den oder die definierten Musterautomaten auswählt und für die Konfiguration, eine Instantiierung und ein Löschen der endlichen Automaten ausgebildet ist.

Ebenso wird die Aufgabe durch ein Verfahren gemäß Anspruch 16 gelöst.

Vorteilhaft ist bei der erfindungsgemäßen Ausführung eines Datenverarbeitungssystems bzw. bei dem erfindungsgemäßen Verfahren, daß durch die Verwendung von Musterautomaten in Verbindung mit der Automatensteuerkomponente automatisch zur Laufzeit endliche Automaten konfigurierbar und instantiierbar sind, ohne daß der Eingriff eines Systemverwalters erforderlich ist. Die Konfiguration und die Instantiierung erfolgt ereignisgesteuert, wobei Ereignisse automatisch von Diensten oder Anwendungen des Datenverarbeitungssystems oder manuell durch einen Benutzer oder Systemverwalter übermittelt werden können. Übermittelt werden Nachrichten, die auf dem Ereignis basieren und neben der Art des Ereignisses Daten enthalten können, die zusätzliche Informationen beispielsweise über die Herkunft der Nachricht oder Randbedingungen bei Eintreten des Ereignisses beinhalten. Der Einfachheit halber wird im folgenden nur von 'Ereignis' gesprochen.

Um ein komplexes Problem, nämlich die Verwaltung eines großen Datenverarbeitungssystems, mit Hilfe endlicher Automaten bearbeiten zu können, wird es zunächst in Teile zerlegt, die mit endlichen Automaten lösbar sind. Dabei werden sowohl Hardware- als auch Softwarekomponenten durch endliche Automaten gesteuert und überwacht. Bei der Definition eines endlichen Musterautomaten müssen die Knoten- und Kantenmengen benannt werden, die Aktionen müssen definiert werden und die Ereignisse sind zu spezifizieren. Das wichtigste bei der Definition von Musterautomaten ist, daß der Graph, der sogenannte Musterautomat, unabhängig von den Parametern, im folgenden Daten genannt, bleiben muß, mit denen er arbeiten soll, um allgemeingültig zu sein. Man erhält damit Mustergraphen bzw. Musterautomaten, die später mit speziellen Daten versehen werden und individuelle Lösungen für dieselbe Art von Bedeutung ausführen.

Im Gegensatz dazu speichern bekannte Cluster Manager beispielsweise den Namen von Betriebsmitteln als Attribute eines Knoten. Damit ist der solche Knoten enthaltende Graph bzw. Automat kein Mustergraph bzw. Musterautomat mehr. Für jede denkbare Komponente muß ein komponentenspezifischer endlicher Automat vorgesehen werden. Da dies praktisch nicht möglich ist, muß auf einen Systemverwalter zurückgegriffen werden, der die notwendigen Anpassungen manuell durchführt.

Nach dem Definieren von endlichen Musterautomaten sind die Automaten ereignisgesteuert zu konfigurieren, das heißt mit den konkreten Daten zu versehen, zu instanziieren, das heißt zur Ausführung zu bringen, oder zu löschen. Diese Schritte können sich automatisch vollziehen, wozu die ereignisgesteuerte Automatensteuerkomponente vorgesehen ist. Bei der Instantiierung der endlichen Automaten ist die Menge der entstehenden Automaten und die Frequenz des Entstehens zu überwachen. Dazu ist eine Art übergeordnete Intelligenz nötig, die genau durch die Automatensteuerkomponente gebildet ist.

Gerade beim Verwalten großer Serverfarmen kommt dieser Automatik mit Hinblick auf die in der Regel geringe Anzahl verfügbarer Systemverwalter eine große Bedeutung zu.

In einer vorteilhaften Ausführung des Datenverarbeitungssystems ist es günstig, die Automatensteuerkomponente auf einer separaten Rechnereinheit anzuordnen, das heißt außerhalb der Maschinen, die zu verwalten sind. Dadurch ist die Steuerung der Maschinen unabhängig von den auf den Maschinen laufenden Diensten und Anwendungen. Besonders vorteilhaft ist es in diesem Fall, die separate Rechnereinheit hochverfügbar einzurichten, indem die separate Rechnereinheit ihrerseits durch einen Clustermanger überwacht wird.

Bei der Gestaltung der endlichen Automaten ist es von Vorteil, Sonderknoten vorzusehen, die im folgenden auch als intelligente Knoten bezeichnet werden. Bei diesen intelligenten Knoten sind Verzweigungen möglich, wie in Figur 14B dargestellt ist. Solche Zustandsgraphen mit intelligenten Knoten sind einfacher und haben insbesondere Zyklen. Der in Figur 14B abgebildete Graph kann nicht mit den eingangs beschriebenen Abhängigkeitsgraphen dargestellt werden. Außerdem hat dieser Graph eine Besonderheit, den Zustand Z5. Über diesen Zustand sind viele verschiedene Zyklen möglich.

Per Definition sind verschiedene Graphen unabhängig voneinander. Wenn es eine Verbindung zwischen Graphen gibt, dann geht das über die reine Graphentheorie hinaus. Die Knoten eines Abhängigkeitsgraphen sowie die 'normalen' Knoten des Zustandsgraphen von Figur 14B haben keinerlei Intelligenz und speichern im Grunde nur den aktuellen Zustand.

Intelligente Knoten werden in einer vorteilhaften Ausführung der Erfindung dazu eingesetzt, Fehler aufzufangen und in geeigneter Weise zu behandeln. Betriebszustände, die bei der Erstellung des Graphen nicht vorhergesehen wurden, können somit einer geeigneten automatischen Behandlung zugeführt werden. Der Graph selbst bleibt einfach.

Die erfindungsgemäße Lösung beinhaltet zusammengefaßt die Vorteile, daß eine Steuerung des ganzen Datenverarbeitungssystems gebildet ist, die
- vom Gesteuerten abgesetzt und hoch verfügbar sein kann,
- mit endliche Automaten/Mustergraphen arbeitet, die automatisch konfiguriert, erzeugt und beseitigt werden,
- mittels Zustandsgraphen jede Art von Prozeßkontrolle ausführen kann, weil die Graphen keine vordefinierte Bedeutung haben, es insbesondere keine Beschränkung in der Gestaltung der Graphen gibt und so Zyklen nicht nur möglich sind, sondern durchaus gewünscht; das Vorhandensein 'intelligenter' Knotentypen vereinfacht dabei die Mustergraphen stark,
- parallele Ereignisbearbeitungen unterstützt und
- auch Veränderungen von Graphen unter definierten Bedingungen zuläßt, sogar nicht-deterministische Zustandsübergänge möglich macht und damit eine Klasse von Problemen zugänglich macht, die algorithmisch bisher schlecht zu bedienen war.

Weitere vorteilhafte Ausgestaltungen der Erfindung sind in den Unteransprüchen angegeben.

Die Erfindung wird nachfolgend anhand eines Ausführungsbeispieles näher erläutert. Es zeigt
- Figur 1: ein ersten, einfaches Ausführungsbeispiel eines erfindungsgemäßen Datenverarbeitungssystems,
- Figur 2: die EDV-Umgebung für ein zweites, komplexes Ausführungsbeispiel eines erfindungsgemäßen Datenverarbeitungssystems,
- Figur 3: eine schematische Darstellung Datenverarbeitungssystems mit Server- und Speichervirtualisierung,
- Figur 4: das Datenverarbeitungssystem von Figur 3 mit zusätzlichen Steuerrechnern,
- Figur 5: die Struktur der Datenbank,
- Figur 6: Registratureinträge endlicher Automaten,
- Figur 7: eine graphische Darstellung eines endlichen Automaten,
- Figur 8: die Struktur eines endlichen Automaten,
- Figur 9: die Erzeugung und Adressieren von ereignisbasierten Nachrichten,
- Figur 10: eine detaillierte Darstellung der Automatensteuerkomponente,
- Figur 11: eine graphische Darstellung eines Automaten mit einem intelligenten Knoten,
- Figur 12: das Zusammenwirken mehrerer Automaten,
- Figuren 13A und 13B: grundsätzliche Darstellungen endlicher Automaten
- Figur 14A: einen Abhängigkeitsgraphen,
- Figur 14B: einen Zustandsgraphen,
- Figur 15: die Verschachtelung von Software-Versionen,
- Figur 16A: ein Diagramm mit dem Zustandsverlauf eines abhängigkeitsgraphengesteuerten Prozesses und
- Figur 16B: den Figur 16A entsprechenden Abhängigkeitsgraphen.

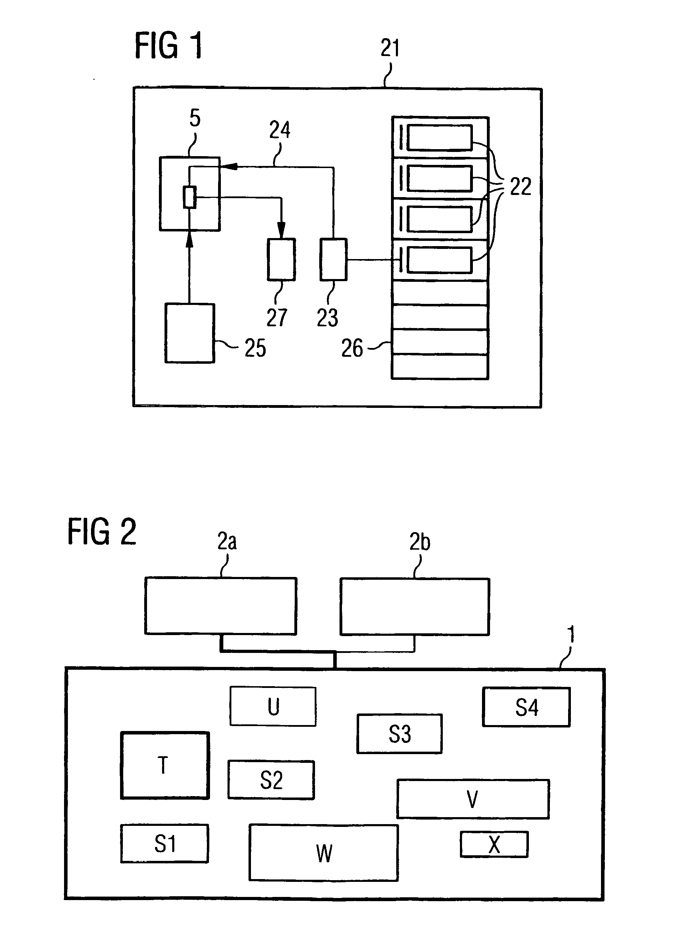

Ein erstes einfaches Ausführungsbeispiel zur Erläuterung der grundlegenden Funktion eines erfindungsgemäß eingerichteten Datenverarbeitungssystems ist die Erweiterung des Datenverarbeitungssystems durch Hot Plug-Hinzufügen eines Blade-Servers 22, wie in Figur 1 dargestellt ist. Dabei wird durch die Hardware des Chassis 26 bzw. durch den diesen Steckplatz überwachenden Dienst 23 ein Ereignis 24 erzeugt und an eine Automatensteuerkomponente 5 gesendet. Diese kann automatisch reagieren, indem sie aus einem ihr zur Verfügung stehenden Vorrat 25 an Musterautomaten einen geeigneten auswählt, in Verbindung mit technischen Daten des Blade-Servers, die im vorliegenden Ausführungsbeispiel in dem Ereignis 24 enthalten sind, sowie ihrer Adresse einen endlichen Automaten konfiguriert, der zur Steuerung und Überwachung des Blade-Servers eingesetzt wird. Dieser Automat wird instantiiert, das heißt als Dienst 27 zur Ausführung gebracht und kann nun zur Steuerung und Überwachung des Blade-Servers 22 eingesetzt werden.

### Aufbau eines erfindungsgemäßen Datenverarbeitungssystems

Zur detaillierten Erläuterung der Erfindung wird zunächst ein komplexes, gattungsgemäßes Datenverarbeitungssystem beschrieben, das Grundlage für die Erfindung ist. Ein solches Datenverarbeitungssystem ist schematisch in der Figur 2 dargestellt. Server S1 bis S4 sind jeweils baugleiche Blade-Server. Die Rechner T..X sind herkömmliche Maschinen beliebigen Typs. Die Gesamtheit der Maschinen ist eine Serverfarm. Als Serverfarm wird eine Anordnung vieler Maschinen bezeichnet. Eine besondere Ausprägung einer Serverfarm sind die sogenannten Blade-Server. Bei diesen ist jeweils ein gesamter Server mit Prozessor, Hauptspeicher, Festplatten usw. auf einer Steckkarte untergebracht. In einem Einschubmodul eines Racks können beispielsweise 20 Server nebeneinander angeordnet werden. Eine Serverfarm mit bis zu 300 Servern kann somit in einem einzigen Rack untergebracht werden. Mit der Serverfarm sind zwei Kontrollrechner 2a und 2b verbunden, die ihrerseits einen Cluster bilden. Die Kommunikation zwischen der Serverfarm und den Kontrollrechnern 2a und 2b erfolgt über SNMP.

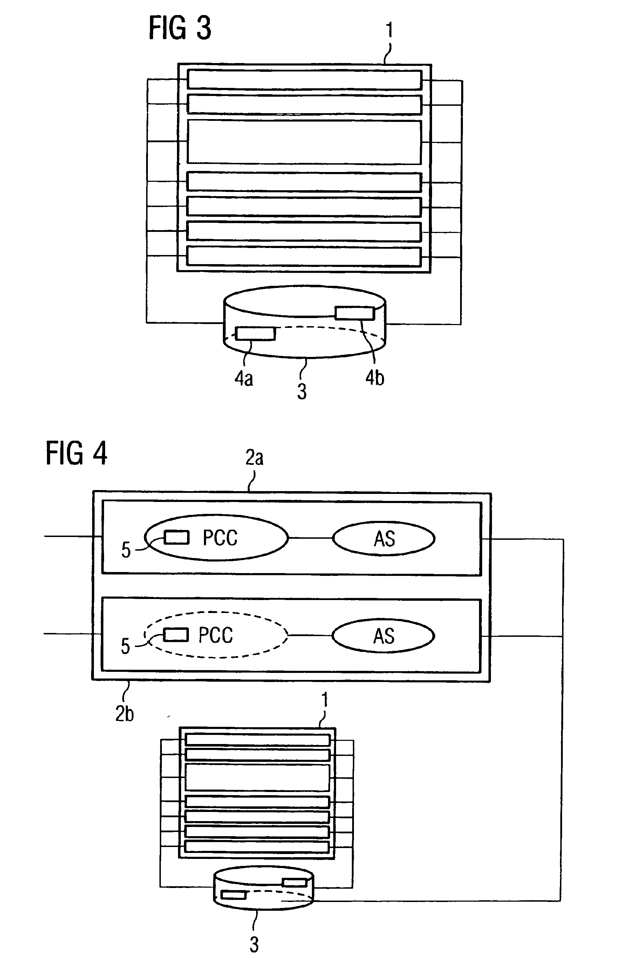

In einem komplexeren Ausführungsbeispiel wird nun dargestellt, wie in einer solchen Umgebung mit endlichen Automaten das Problem der Überwachung und Steuerung einer Serverfarm gelöst werden kann. Aus Vereinfachungsgründen werden aber nicht alle einzelnen Dienste betrachtet, die innerhalb der Serverfarm bereitgestellt werden, sondern die kleinste Überwachungs- und Verwaltungseinheit in diesem Beispiel ist eine Maschine. Das Prinzip ist jedoch auf alle Dienste innerhalb einer Serverfarm anwendbar. Es wird eine Serverfarm betrachtet, die mittels Server- und Storage-Virtualisierung bereits auf minimalen Verwaltungsaufwand ausgerichtet ist. Ein wichtiges Merkmal ist die NetBoot-Eigenschaft, das heißt die Maschinen der Serverfarm 1 haben ihre Daten nicht mehr auf einer privaten Platte, sondern im Rahmen der Storagevirtualisierung kann die Software einer ganzen Maschine, das sogenannte 'Image' 4a oder 4b, beliebig auf andere Maschinen verteilt werden - falls die grundlegenden Architekturmerkmale stimmen (Figur 3). In diesem Szenario vollzieht sich das Booten von Maschinen über das Netzwerk (NetBoot) von einer zentralen Speichereinheit 3. Eine Steuerungssoftware, im folgenden PCC genannt, sorgt dabei automatisch für die grundlegende Konfiguration der Speichereinheit und zentraler Dienste wie DHCP u. ä. Teil der Steuerungssoftware PCC ist auch eine Automatensteuerkomponente 5.

Mit den zusätzlichen Kontrollrechnern, die auch als Kontrollknoten bezeichnet werden (Figur 4), ergibt sich ein vollständiges Szenario. Die beiden Kontrollknoten 2a und 2b bilden einen Cluster mit Hinblick auf die Hochverfügbarkeit. Die Steuerungssoftware PCC ist auf genau einer dieser beiden Maschinen aktiv. Angeschlossen ist ein Alarmdienst AS, der die Anzeige eintreffender SNMP Ereignisse mit ihren enthaltenen Daten anzeigt und einfache Aktionen, wie beispielsweise das Versenden einer Email oder das Verschicken einer SMS veranlassen kann. Der Alarmdienst AS wird von PCC quasi 'gefüttert'. Die Daten von PCC liegen in der Speichereinheit 3 genauso wie die Daten von Anwendungen der Serverfarm 1. Das bedeutet, daß die Speichereinheit 3 in jedem Fall hochverfügbar auszulegen ist.

In diesem Beispiel (re-)organisiert PCC die Maschinen S1..S4 und T..X der Serverfarm 1 als Ganzes, das heißt wenn eine neue Maschine 'erscheint', wird auf Grund dieses Ereignisses die nötige Infrastruktur geschaffen, so daß die neue Maschine ohne Administrator-Eingriff lauffähig wird. Bei Ausfall einer Maschine der Serverfarm reorganisiert PCC die Verteilung der Images auf die Server S1..S4 derart, daß das ausgefallene Image auf einer anderen Maschine ablauffähig wird. Dabei wird der Betrieb der nicht betroffenen Maschinen nicht gestört.

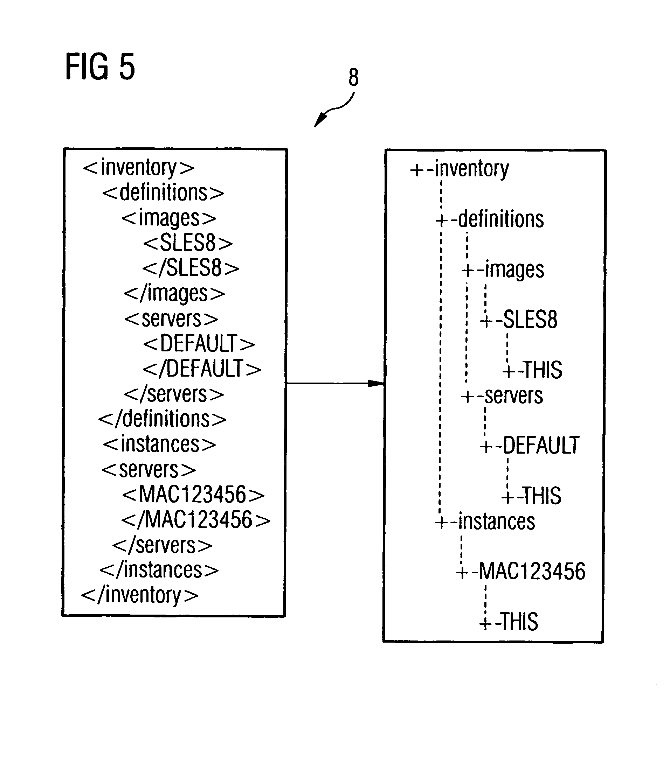

Alle Daten von PCC werden in einer Datenbank 8 in einer XMLkonformen Art verwaltet. Da allerdings der Zeitbedarf für das Bearbeiten derartig formatierter Daten sehr hoch ist, werden die Daten beim Starten von PCC (siehe Figur 5) in eine Baumstruktur gebracht, die aus der XML-Struktur direkt ableitbar ist. Zum Sichern oder Anzeigen wird die Baumstruktur wieder in ein XML-konforme Darstellung umgewandelt. Dabei wird zum Anzeigen der Daten eine XSLT-Abbildung verwendet, die im wesentlichen auf Seiten der Browser bearbeitet wird. Dieses Szenario gehört nicht zum wesentlichen Anliegen dieser Erfindung und wird daher nicht weiter betrachtet. Es ist allerdings zu erwähnen, daß alle Zugriffe auf die Daten einer Maschine mit der MAC-Adresse des LAN-Kontrollers adressiert werden, der zum Booten genutzt wird. Das hat den großen Vorteil, daß auch Maschinen, die noch nicht eingeschaltet sind oder die ausgefallen sind, noch behandelt werden können, denn die MAC-Adresse eines LAN-Kontrollers ist statisch und weltweit eindeutig und auch auf ausgeschalteten Maschinen feststellbar.

Die Steuerung der Hard- und Softwarekomponenten erfolgt im Rahmen dieser Erfindung mittels endlicher Automaten. Ein endlicher Automat ist in der beschriebenen Umgebung ein benanntes Skript, das bei der Konfiguration in der Automatensteuerkomponente registriert wird und dabei eine weltweit eindeutige Objekt-Identifikation erhält. Über diese Objekt-Identifikation ist der endliche Automat mit einem Ereignis verbunden. So hat beispielsweise das Ereignis mit dem Namen 's31ServerBladeAdded' die Nummer '.1.3.6.1.4.1.7244.1.1.1.0.1606'. Dieses Skript bearbeitet die Maschinentafel und kommuniziert mit anderen Skripten oder endlichen Automaten. Darüber hinaus sorgt ein solcher endlicher Automat oder ein Skript dafür, daß über alle Aktionen, die im Zusammenhang mit einem Ereignis vorgenommen werden, ein UNDO Log geführt wird, so daß beim Ausfall eines Kontrollknotens 2a oder 2b die angefangenen Aktionen zurückgesetzt werden können. Ein endlicher Automat ist somit nur aktiv, wenn ein Ereignis abzuarbeiten ist.

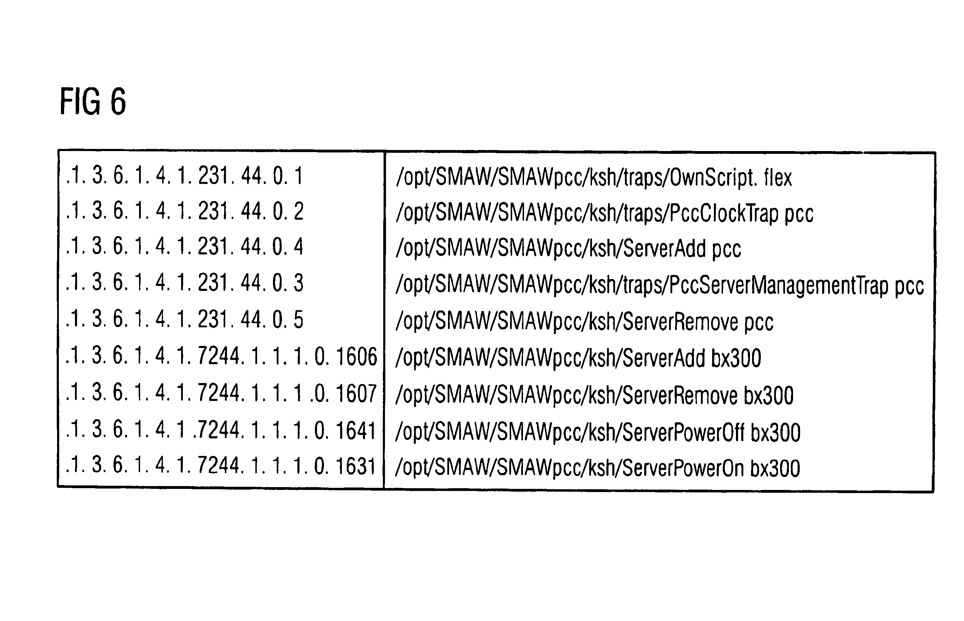

Beim Einschalten von PCC werden alle Ereignisse, die behandelt werden sollen, für einen Musterautomaten registriert, das heißt die Registratur des Automatenmanagers erhält Zweitupel der Art Skriptname - SNMP-Objekt-ID. Diese Zuordnungen können beliebig verändert werden, und zwar auch dynamisch. Es können auch mehr als ein Skript für eine Ereignis registriert sein, wie in Figur 6 dargestellt ist.

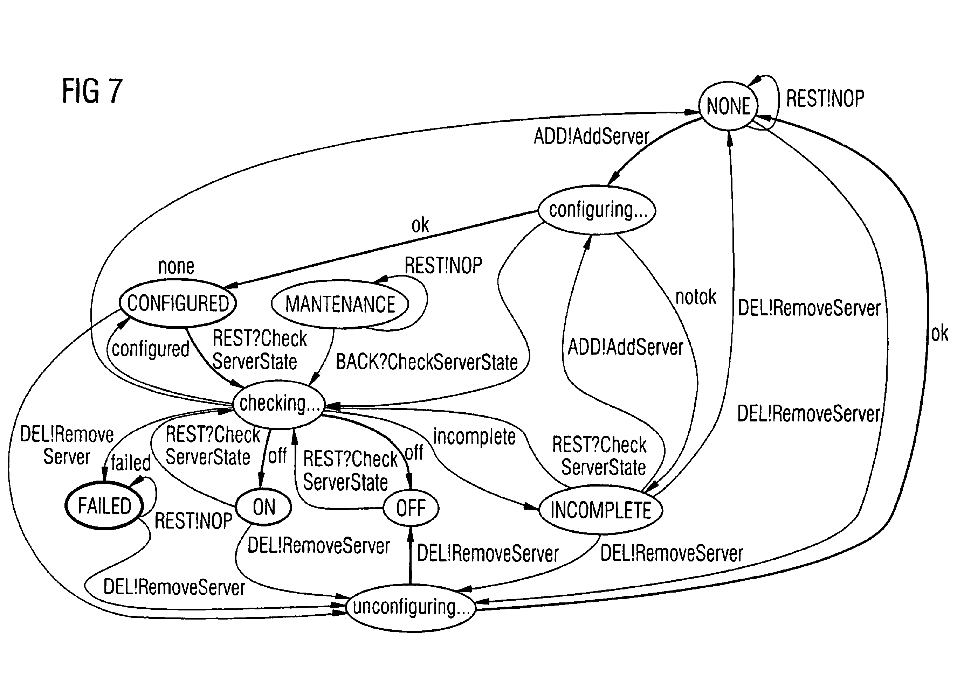

Ein realitätsnaher endliche Automat bzw. eine Registratur für die Funktion 'NetBoot' ist in Figur 7 graphisch dargestellt. Die stabilen Zustände CONFIGURED, MAINTENANCE, ON, NONE, FAILED, OFF und INCOMPLETE sind mit Großbuchstaben benannt. Die Zwischenzustände haben am Namensende drei Punkte. Zur einfacheren Erkennung von intelligenten Entscheidungsknoten wird die Kantenbezeichnung "REST?CheckServerState" verwendet. An dieser Stelle ist eine weitere Vereinfachung für das 'Bauen' von endliche Automaten zu erwähnen. Nicht alle möglichen Ereignisse müssen immer im endliche Automat angegeben werden. Das Kürzel REST bezeichnet genau die Kante, die gewählt wird, wenn für ein Ereignis keine ausgezeichnete Kante vorhanden ist. Eine solche Kante führt meistens zu einem intelligenten Knoten, der entscheidet, wohin verzweigt wird. Der intelligente Knoten ist im Falle des Graphen von Figur 7 der Knoten "checking...". In diesem Übergangszustand wird der aktuelle Serverstatus geprüft und je nach Prüfungsergebnis zu den stabilen Zuständen FAILED, ON, usw. verzweigt. Die stabilen Zustände werden erst verlassen, wenn ein Ereignis eintrifft. Angenommen das Prüfungsergebnis im Knoten "checking..." war positiv, also "on", dann wird der Zustand "ON" aktiv. Nach eintreffen eines Ereignisses "DEL!RemoveServer" geht der Automat in den Zustand "unconfiguring..." über, um anschließend in den stabilen Zustand "OFF" zu gelangen, sofern beim Vorgang "unconfiguring..." keine Fehler aufgetreten sind.

Mit dem Start beider Kontrollknoten 2a und 2b entscheidet sich, welche dieser Maschinen die aktive wird. Die andere Maschine erhält zwar weiterhin die Ereignisse, führt aber keinerlei Bearbeitung durch. Mit dem Eintreffen eines Ereignisses im Kontrollknoten 2a oder 2b werden die Daten durch den Automatenmanager 5 gelesen. Um Sicherzustellen, daß beim Ausfall eines der beiden Kontrollknoten 2a oder 2b weder ein Ereignis verloren geht noch mehrfach behandelt wird, werden alle Daten aller Ereignisses so abgespeichert, daß auch bei einem Ausfall die entsprechenden Daten dem Ersatz-PCC auf dem anderen Kontrollknoten zur Verfügung stehen. Die Automatensteuerkomponente 5 schreibt die Daten dazu in eine 'memory mapped' Datei, die in der Speichereinheit 3 liegt. Beim Anlauf des Ersatz-PCC sind dann alle Daten der Automatensteuerkomponente 5 verfügbar und die Bearbeitung geht nahtlos weiter - mit dem Zusatz, daß zuvor alle Kommandos über das UNDO Log zurückgesetzt werden.

Mit dem Eintreffen eines Ereignisses bei der aktiven Automatensteuerkomponente 5 werden die enthaltenen Daten entnommen und als Zweitupel des Typs SNMP-Objekt-ID = Wert in die Prozeßumgebung eingefügt. Auf diese Art stehen die Daten auf einfache Art allen nachfolgenden Bearbeitungsinstanzen zur Verfügung. Genau auf diesem Wege gelangen auch die Mitteilungen eines endlichen Automaten zu den anderen endlichen Automaten durch Vermittlung der aktiven Automatensteuerkomponente. Über den in den Daten enthaltenen Schlüssel, zumeist eine MAC-Adresse, wird der aktuelle Zustand ermittelt und zusammen mit dem vorliegenden Ereignis wird die Kante im Graph ausgewählt und die entsprechende Aktion gestartet.

Wenn es sich bei der Aktion um eine Entscheidung handeln sollte, wird das Ergebnis als neues Ereignis behandelt und die Maschinentafel erneut zu Rate gezogen, um den nächsten Zustandsübergang vornehmen zu können. Dabei gilt für alle Graphen die folgende Grundregel, daß es stabile Zustände und instabile Zustände gibt. Stabile Zustände werden eingenommen und der endliche Automat beendet die Bearbeitung, um auf das nächste Ereignis zu warten. Im Falle von instabilen Zuständen geht die Bearbeitung so lange weiter, bis ein stabiler Zustand erreicht wird. Es kann beliebig viele stabile oder instabile Zustände geben.

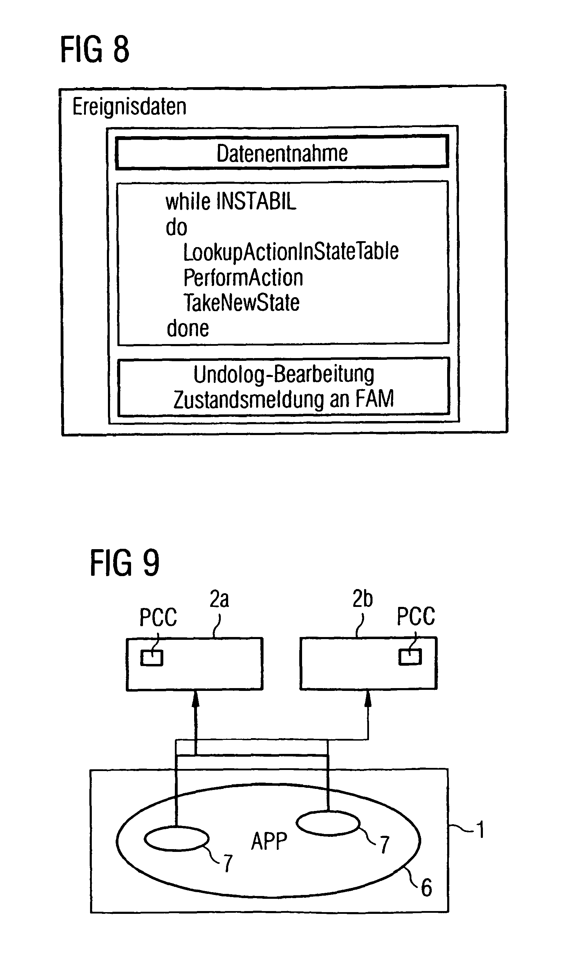

Nachdem die gewünschte Aktion gestartet wurde, werden die einzelnen Kommandos abgearbeitet und dabei wird ein UNDO Log geschrieben (Figur 8). Zur Synchronisierung beim Arbeiten auf der Datenbank verwenden die Skripte, die die Aktionen implementieren, das Konzept von critical regions. Das Durchlaufen aller Programmbereiche, die Daten bearbeiten, die potentiell auch anderen Aktionen zur Verfügung stehen, wird durch Semaphore sequentialisiert.

Wie oben angeführt, besitzt ein erfindungsgemäßes Datenverarbeitungssystem insbesondere die Vorteile, daß eine Steuerung des ganzen Datenverarbeitungssystems gebildet ist, die
- vom Gesteuerten abgesetzt ist und hoch verfügbar sein kann,
- mit endliche Automaten/Mustergraphen arbeitet, die automatisch konfiguriert, erzeugt und beseitigt werden,
- mittels Zustandsgraphen jede Art von Prozeßkontrolle ausführen kann, insbesondere mit Hilfe intelligenter Knoten und
- parallele Ereignisbearbeitungen unterstützt und auch Veränderungen von Graphen unter definierten Bedingungen zuläßt.

Diese Teilaspekte werden nun näher erläutert.

### Abgesetztes und gesichertes Steuern

Die erfindungswesentlichen Merkmale des vorgeschlagenen Datenverarbeitungssystems sind im wesentlichen als Software realisierbar. Allerdings ist es ein besonderes Kennzeichen des Datenverarbeitungssystems in der bevorzugten Ausgestaltung, daß die Automatensteuerkomponente nicht innerhalb der zu steuernden Maschinen, also beispielsweise in der Serverfarm selbst abläuft, sondern auf genau zwei abgesetzten 2a und 2b (Figuren 2 und 9). Die steuernde Software selbst ist hoch verfügbar ausgelegt. Sie ist somit keinerlei Einflüssen aus der zu steuernden Welt unterlegen. Insbesondere gibt es keine Notwendigkeit, mit der Entwicklung der zu steuernden Prozesse mitzuhalten. Da sich die Zahl der steuernden Maschine auf genau zwei Stück begrenzt, sind die Basis-Algorithmen im Bereich Hochverfügbarkeit oftmals trivial. Zur weiteren Vereinfachung ist nur eine Kontrollinstanz zu einer Zeit aktiv.

Ein weiteres wichtiges Merkmal der vorgeschlagenen Lösung ist es, daß innerhalb des zu steuernden Prozesses keinerlei Implantate der Steuerung nötig sind, also kein Eingriff in den Aufbau der zu steuernden Komponenten erforderlich ist. Dabei ist es wichtig festzustellen, daß auf Grund des notwendigen Regelkreises Implantate im Grundsatz zwar notwendig sind, aber durch die Wahl von SNMP als Ereignisträger sind die notwendige Implantate 7 bereits in allen wichtigen Anwendungen 6 vorhanden, wie in Figur 9 dargestellt ist. Ein weiterer Vorteil von SNMP ist, daß dieses Protokoll maschinenunabhängig ist, also nicht an einen bestimmten Prozessortyp, ein bestimmtes Betriebssystem oder einen bestimmten Datentyp gebunden ist. In der Applikation 6 sind Elemente 7 vorhanden, die die Funktion von Implantaten erfüllen. Diese Elemente 7 werden auf Seiten der Herstellers der Anwendung 6 eingebaut, ohne daß es darauf ankommt, ob die Funktion der Implantate 7 im späteren Betrieb benötigt wird. Die Implantate detektieren bestimmte Zustände und erzeugen entsprechende Nachrichten, die sie über eine festgelegte Schnittstelle zur Verfügung stellen. Die Steuerungssoftware PCC auf den Kontrollrechnern 2a und 2b ist dafür eingerichtet, die bereitgestellten Nachrichten zu empfangen und zu verarbeiten.

In der hier beschriebenen konkreten Ausführung sind zwei getrennten Maschinen 2a und 2b vorgesehen, auf denen die Steuerungssoftware PCC läuft. Beide Maschinen 2a und 2b werden auf herkömmliche Art als Cluster betrieben. Die Steuerungssoftware PCC ist über SNMP-Ereignisse an die Serverfarm 1 gekoppelt. Die ereignissendenden Komponenten sind nicht Teil der Steuerungssoftware PCC, sondern gehören direkt zu den zu steuernden Anwendungen, wie z.B. zu ORACLE, weil dort allein das genaue Wissen um die Funktion der Anwendung vorhanden ist. Damit sind die zu kontrollierenden Maschinen der Serverfarm 1 frei von Überwachungssoftware und sind im Hinblick auf die Koordination von Änderungen mit der Steuerungssoftware wesentlich leichter zu verwalten. Die oft tückischen Versionsvielfalten machen dann auch weitaus weniger Probleme. Statt dieser Konfiguration liegen selbstverständlich auch andere Konfigurationen im Ermessen des Fachmanns und sind von der Erfindung umfaßt. Beispielsweise könnte das Vorsehen eigener Implantate und ein anderer Weg der Ereignisübermittlung in Betracht gezogen werden.

### Mustergraphen, gesteuertes Konfigurieren, Erzeugen und Beseitigen von endlichen Automaten

Es ist wichtig, daß die Mustergraphen selbst von jeder direkten Bindung über Attribute des Knotens an den zu steuernden Prozeß befreit werden. So besteht ein Mustergraph nur noch aus Zuständen und Kanten, die beliebig benannt werden können. Diese Mustergraphen können beliebig häufig erzeugt und betrieben werden. Erst beim Erzeugen des Graphen werden die Bezüge zur realen Welt hergestellt.

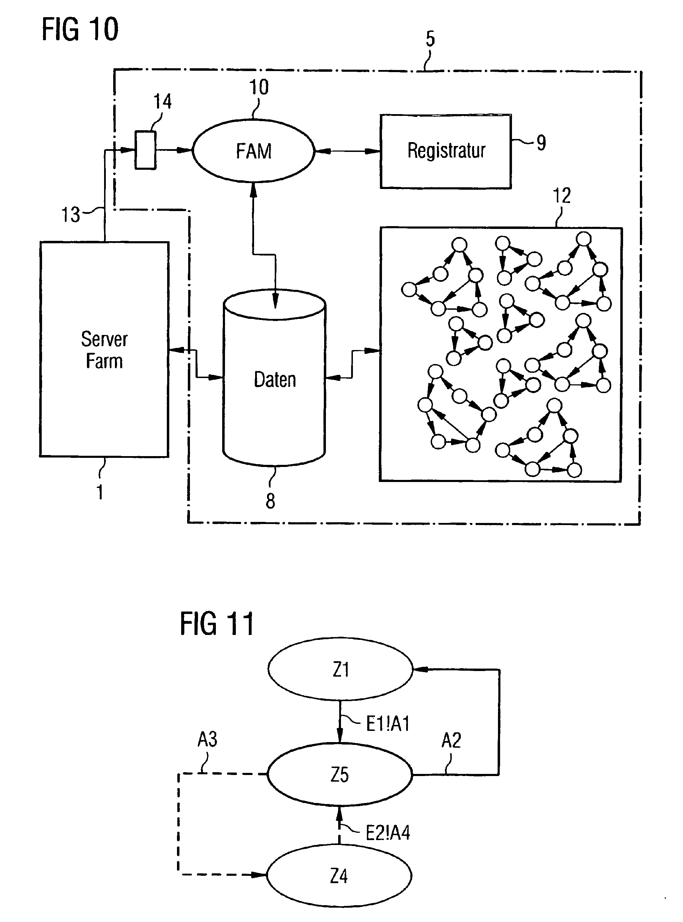

Der wohl wichtigste Teil der Lösung ist die Automatensteuerkomponente 5, die in die Steuerungssoftware PCC integriert ist (Figur 10). Sie erhält die Ereignisse 13 von den zu steuernden Prozessen aus der Serverfarm 1 und erzeugt, wenn nötig, neue endliche Automaten, wenn ein bisher unbekannter zu steuernder Prozeß, zum Beispiel eine Softwarekomponente einer Anwendung oder ein eine Hardwarekomponente überwachender Dienst, sich gemeldet hat. Dazu entnimmt der Automatenmanager 10 der Automatensteuerkomponente 5 die notwendigen Konfigurationsdaten entweder dem Ereignis 13 selbst oder er holt sich die nötigen Daten aus dem zu steuernden Prozeß. Die Daten werden in einer Datenbank 8 abgelegt, die sehr einfach aufgebaut sein kann, zum Beispiel aus einer Textdatei bestehen kann. Es sind aber auch komplexere Datenbanktypen einsetzbar. Dann kann ein endliche Automat erzeugt werden und die Steuerung des Prozesses beginnt mit den aktuellen Bezügen zur realen Welt. Dieser Vorgang wird Konfiguration eines endlichen Automaten genannt.

Hier ist ein großer Unterschied zu den bekannten Cluster Managern gegeben, weil dort jeder neue endliche Automat manuell gebaut und mit Bezügen zur realen Welt versehen werden muß. Im Grunde beschränkt sich der Aufwand mit dem erfindungsgemäßen neuen Datenverarbeitungssystem auf die Erstellung eines einfachen Mustergraphen, der für viele Typen von zu steuernden Prozessen dient, denn sowohl die ereignissendenden Teile als auch die Aktionsträger sind Teile des zu steuernden Prozesses und nicht mehr Teil der Steuerungssoftware. So ist der Befehl zum Starten einer Anwendung beispielsweise im Bereich der Steuerungssoftware nicht abhängig davon, welche Version einer Anwendung gestartet werden soll. Das wird beim Ablaufen der Aktion unter Verantwortung der Anwendung beachtet.

Bei der Konfiguration wird der endliche Automat benannt wie oben ausgeführt und die Daten und Automat werden über diesen Namen miteinander verbunden. Damit werden die endlichen Automaten an 'ihren' Prozeß oder 'ihre' Anwendung gekoppelt. Insbesondere der aktuelle Zustand eines Automaten selbst ist auch in der Datenbank abgelegt.

Das Erzeugen endlicher Automaten kann beeinflußt werden. Ereignisse können permanent oder zeitweise geblockt werden, Ereignisse können beispielsweise aus Sicherheitsgründen ausgefiltert werden und die Erzeugungsrate kann verlangsamt werden. Dazu ist ein Filter 14 vorgesehen. Dies wird alles durch die endlichen Automaten selbst veranlaßt und durch die Automatensteuerkomponente 5 umgesetzt.

Die Beseitigung endlicher Automaten vollzieht sich ebenfalls automatisch.

In der konkreten Ausführung von Figur 10 werden die SNMP-Ereignisse 13 von der Automatensteuerkomponente 5 aufgenommen, die über eine Registratur 9 verfügt. Dort ist die Zuordnung eines Ereignisses zu einem Mustergraphen und einer Aktion abgelegt. Neue endliche Automaten werden im wesentlichen dadurch erzeugt, daß ihre Ereignisse registriert und ihre Daten angelegt werden. Die eintreffenden Ereignisse 13 können mit dynamisch ladbaren Filtern 14 bearbeitet werden. Über die Registratur 9 der Automatensteuerkomponente 5 können Zuordnungen dynamisch verändert oder auch gelöscht werden. Über eine interne Statistik der Automatensteuerkomponente kann die Erzeugungsrate gesteuert werden und die Automatensteuerkomponente 5 kann dynamisch Bibliotheken laden, die Ereignisse vorbearbeiten oder ausfiltern (spamming).

### Zustandsgraphen, Zyklen und intelligente Knotentypen

Im Gegensatz zu Abhängigkeitsgraphen ist bei Zustandsgraphen genau festgelegt, über welche Kante der Wechsel von einem Zustand zum nächsten stattfindet. Im Normalfall haben die Knoten der Graphen keine Intelligenz. Aber mit der Einführung von intelligenten Knoten, die in der Lage sind, selbständig eine Entscheidung über die zu wählende Kante zu treffen, über die der nächste Zustandswechsel stattfindet, kommt eine neue Art von Eigenschaft in die Graphen, die entscheidet zur Vereinfachung beiträgt. So kann beispielsweise der Knoten entsprechend dem Zustand Z5 in der Figur 14B beziehungsweise in der detaillierteren Figur 11 als 'Ausputzer' betrachtet werden. Bei jedem Fehlerereignis in einem der Zustände Z1 bis Z4 geht der Graph in den Zustand Z5, entscheidet über die vorliegende Situation und verzweigt gegebenenfalls unter Ausführung einer Bereinigungsaktion in einen 'stabilen' Zustand Z1 bis Z4. Die Art der Entscheidung ist nicht festgelegt. Von der einfachen boolschen Logik bis hin zur Fuzzy Logik ist alles möglich. Darüber hinaus steht diesem Knoten auch der Zugriff auf beliebige Aktionen zur Verfügung, mit deren Hilfe beispielsweise die aktuelle Situation in der 'realen Welt' oder dem zu steuernden Prozeß geprüft werden kann.

Gerade in der SNMP-Welt ist diese Art Graph sehr vorteilhaft. Beispielsweise beim Eintreffen von widersprüchlichen Ereignisse auf Grund von Überholvorgängen erfolgt so die Synchronisierung und 'alte' Ereignisse richten keinen Schaden mehr an.

Im Gegensatz zu Graphen, wo ein Knoten nur als Merker des aktuellen Zustands dient, haben die Knoten in dieser Umgebung alle ein Mindestmaß an 'Intelligenz', um komplexe Funktionen realisieren zu können, wie oben beschrieben wurde.

### Kommunikation mit endlichen Automaten

Die endlichen Automaten selbst haben keine Kenntnis ihrer Umgebung und können nicht direkt miteinander kommunizieren und sie können sich insbesondere nicht untereinander beeinflussen, das heißt ihre Maschinentafeln verändern. An dieser Stelle ist allerdings zu erwähnen, daß die Veränderung des eigenen oder eines anderen Graphs theoretisch durchaus möglich ist, allerdings verlassen wir hier das Gebiet endlicher Automaten, um in den Bereich von neuronalen Netzen zu wechseln, wo völlig andere Bedingungen gelten und wo die Wissenschaft sicher noch viel Zeit braucht, um das Thema zu beherrschen. Jedenfalls kann ein Automatenmanager durchaus die Teile dieser Aufgabe, beispielsweise Erweiterung von Maschinentafeln, übernehmen oder zumindest koordinieren, die sich mit der reinen Kommunikationsproblematik der endlichen Automaten untereinander befassen.

Dazu hat gemäß der Erfindung jeder Knoten eines Automaten Zugang zur Datenbank 8 und kann nicht nur die Zustände aller anderen endliche Automaten erfragen, sondern auch beeinflussen. Über Funktionen der Automatensteuerkomponente 5 können Informationen von einzelnen endlichen Automaten an beliebige andere übergeben werden. Die Registrierung von endliche Automaten und Ereignissen kann verändert werden, die Anzahl der parallel zu bearbeitenden Ereignisse kann beeinflußt werden, ausgezeichnete endliche Automaten können sich registrieren, um vom Erzeugen neuer endlicher Automaten benachrichtigt zu werden, nötigenfalls können dynamisch Filterbibliotheken 14 in die Automatensteuerkomponente 5 geladen werden oder wieder entfernt werden. Alle endlichen Automaten eines Musters können einen 'Familienzustand' haben, der bei jeder Aktivierung eines endlichen Automaten aus dieser Familie übergeben und verändert werden kann. Diese Möglichkeiten ergeben sich im wesentlichen durch das Vorhandensein der Automatensteuerkomponente, die als übergeordnete Instanz die Menge der einzelnen endlichen Automaten organisiert bzw. unterstützt. Als zweite Grundlage dient die Datenbank 8, durch die alle endlichen Automaten Zugriff auf jede Art von Daten erhalten können.

### Parallele Ereignisbearbeitung

Die einzelnen endlichen Automaten sind so organisiert, daß jedes Ereignis sofort bearbeitet wird. Ereignisse werden nicht geparkt. Damit kann ein endlicher Automat in mehreren Instanzen zur selben Zeit existieren. In kritischen Situationen liegen dem endlichen Automaten immer alle Ereignisse vor und in Kommunikation untereinander kann die 'richtige' Entscheidung über die zu wählende Aktion getroffen werden und eine Instanz übernimmt die Durchführung (siehe fette Pfeile in Figur 12 vom Zustand Z5 zum Zustand Z3). Die andern beenden die Bearbeitung. Damit können beispielsweise Situationen bereinigt werden, in denen ein Fehler in der Serverfarm mehr als einen Folgefehler bewirkt, der in unterschiedlichen endlichen Automaten bearbeitet wird.

### Dynamische Veränderung von Graphen

Insbesondere die Intelligenz von Entscheidungsknoten ist als Datum wie alle anderen in der Datenbank 8 abgelegt und damit veränderbar. Das betrifft auch die Maschinentafel beziehungsweise den Graphen. Das muß nicht unbedingt im Normalbetrieb sinnvoll sein, kann aber dann überaus interessant sein, wenn aus Lastprofilen Folgerungen abgeleitet werden, die dauerhaft in das Verhalten endlicher Automaten eingehen sollen. Dieser Punkt wird in diesem Dokument nicht weiter betrachtet, weil das eigentlich Wichtige weniger die Möglichkeit des Veränderns selbst ist, sondern eher wie die passenden Schlüsse aus vorliegenden Lastprofilen gezogen werden können.

### Bezugszeichenliste

- 1: Serverfarm
- 2a: Kontrollrechner
- 2b: Kontrollrechner
- 3: Speichereinheit
- 4a: Image
- 4b: Image
- 5: Automatensteuerkomponente
- 6: Anwendung
- 7: Implantate
- 8: Datenbank
- 9: Registratur
- 10: Automatenmanager
- 11: Steuerungssoftware
- 12: Musterautomatenvorrat
- 13: SNMP-Ereignisse
- 14: Filter
- 22: Blade-Server
- 23: Dienst
- 24: Ereignis
- 25: Musterautomatenvorrat
- 26: Chassis
- 27: Dienst

- PCC: Steuerungssoftware
- AS: Alarmdienst

## Patentansprüche

1. Datenverarbeitungssystem mit einer Vielzahl von Hardware-und Softwarekomponenten, wobei die Komponenten durch endliche Automaten steuerbar sind,
**dadurch gekennzeichnet, daß**
- mindestens ein endlicher Musterautomat definiert ist, der zur Steuerung und Überwachung vorbestimmter Komponententypen geeignet ist, wobei für die Steuerung einer Komponente auf der Basis des oder der definierten Musterautomaten in Verbindung mit komponentenspezifischen Parametern endliche Automaten konfigurierbar sind, und
- eine ereignisgesteuerte Automatensteuerkomponente (5) vorgesehen ist, die den oder die definierten Musterautomaten auswählt und für die Konfiguration, eine Instantiierung und ein Löschen der endlichen Automaten ausgebildet ist.

2. Datenverarbeitungssystem nach Anspruch 1,
**dadurch gekennzeichnet, daß** Mittel vorgesehen sind zum Clonen endlicher Musterautomaten für neue Hardware- oder Softwarekomponenten.

3. Datenverarbeitungssystems nach Anspruch 1 oder 2,
**dadurch gekennzeichnet, daß** Musterautomaten Sonderknoten (Z5, checking...) enthalten, die eine verzweigung ermöglichen.

4. Datenverarbeitungssystems nach Anspruch 3,
**dadurch gekennzeichnet, daß** die Sonderknoten (Z5, checking...) derart ausgebildet und in dem Musterautomat angeordnet sind, daß durch sie eine Fehlerbehandlung durchgeführt wird.

5. Datenverarbeitungssystem nach einem der Ansprüche 1 bis 4,
**dadurch gekennzeichnet, daß** die Automatensteuerkomponente (5) durch einen endlichen Automaten gebildet ist, wobei Zustandsänderungen durch empfangene Ereignisse (13) ausgelöst werden.

6. Datenverarbeitungssystem nach Anspruch 5,
**dadurch gekennzeichnet, daß** die Automatensteuerkomponente (5) Sonderknoten enthält, die eine verzweigung ermöglichen.

7. Datenverarbeitungssystem nach Anspruch 6,
**dadurch gekennzeichnet, daß** dynamisch ladbare Ereignisfilter (14) vorgesehen sind zur Ausfilterung als unbeachtlich eingestufter Ereignisse (13).

8. Datenverarbeitungssystem einem der Ansprüche 1 bis 7,
**dadurch gekennzeichnet, daß** für vorbestimmte Ereignisse Parameter registriert sind und zur Verarbeitung des Ereignisses die registrierten Parameter verwendet werden.

9. Datenverarbeitungssystem nach Anspruch 8,
**dadurch gekennzeichnet, daß** zur Verarbeitung verschiedener Ereignisse (13) ein gleicher endlicher Automat in Verbindung mit den ereignisspezifischen Parametern vorgesehen ist.

10. Datenverarbeitungssystem nach einem der Ansprüche 1 bis 9,
**dadurch gekennzeichnet, daß** an die Automatensteuerkomponente (5) gesendete Ereignisse automatisch durch Zustandssensoren (7) erzeugt werden, die Hardwarekomponenten, Diensten oder Anwendungen zugeordnet sind.

11. Datenverarbeitungssystem nach einem der Ansprüche 1 bis 10,
**dadurch gekennzeichnet, daß** Mittel vorgesehen sind zur manuellen Erzeugung von an die Automatensteuerkomponente zu sendenden Ereignissen.

12. Datenverarbeitungssystems nach einem der Ansprüche 1 bis 11,
**dadurch gekennzeichnet, daß** die Ereignisse (13) mittels des Simple Network Management Protocol übermittelt werden.

13. Datenverarbeitungssystem nach einem der Ansprüche 1 bis 12,
**dadurch gekennzeichnet, daß** durch Komponenten des Datenverarbeitungssystems eine Serverfarm (1) gebildet ist.

14. Datenverarbeitungssystem nach Anspruch 13,
**dadurch gekennzeichnet, daß** die Automatensteuerkomponente (5) auf einer separaten Rechnereinheit (2a, 2b) angeordnet ist, die nicht Teil der Serverfarm (1) ist.

15. Datenverarbeitungssystem nach Anspruch 14,
**dadurch gekennzeichnet, daß** die separate Rechnereinheit (2a, 2b) ihrerseits durch einen hochverfügbaren Cluster gebildet ist.

16. Verfahren zur Steuerung eines Datenverarbeitungssystems mit einer Vielzahl von Hardware- und Softwarekomponenten, bei dem die Komponenten durch endliche Automaten steuerbar sind,
**dadurch gekennzeichnet, daß**
- mindestens ein endlicher Musterautomat definiert wird, der zur Steuerung und Überwachung vorbestimmter Komponententypen geeignet ist, wobei für die Steuerung einer Komponente auf der Basis des oder der definierten Musterautomaten in Verbindung mit komponentenspezifischen Parametern endliche Automaten konfigurierbar sind, und
- durch eine ereignisgesteuerte Automatensteuerkomponente (5) der oder die definierten Musterautomaten ausgewählt und die endlichen Automaten konfiguriert, instantiiert oder gelöscht werden.

17. Verfahren nach Anspruch 16,
**dadurch gekennzeichnet, daß** die Automatensteuerkomponente (5) hochverfügbar ausgeführt wird.

18. Verfahren nach Anspruch 17,
**dadurch gekennzeichnet , daß** die Automatensteuerkomponente (5) auf einer separaten Rechnereinheit (2a, 2b) ausgeführt wird.

19. Verfahren nach einem der Ansprüche 16 bis 18,
**dadurch gekennzeichnet , daß** die Automatensteuerkomponente (5) mittels eines endlichen Automaten arbeitet, der Zustandsknoten (checking...) besitzt, die Verzweigungen erlauben.

## Claims

1. Data processing system having a multiplicity of hardware and software components, the components being able to be controlled by finite automatons,
**characterized in that**
- at least one finite model automaton which is suitable for controlling and monitoring predetermined component types is defined, finite automatons being able to be configured in order to control a component on the basis of the defined model automaton(s) in conjunction with component-specific parameters, and
- an event-controlled automaton control component (5) which selects the defined model automaton(s) and is designed to configure, instantiate and erase the finite automatons is provided.

2. Data processing system according to Claim 1,
**characterized in that** means are provided for the purpose of cloning finite model automatons for new hardware or software components.

3. Data processing system according to Claim 1 or 2,
**characterized in that** model automatons contain special nodes (Z5, checking...) which enable branching.

4. Data processing system according to Claim 3,
**characterized in that** the special nodes (Z5, checking...) are designed and are arranged in the model automaton in such a manner that they handle errors.

5. Data processing system according to one of Claims 1 to 4,
**characterized in that** the automaton control component (5) is formed by a finite automaton, state changes being triggered by received events (13).

6. Data processing system according to Claim 5,
**characterized in that** the automaton control component (5) contains special nodes which enable branching.

7. Data processing system according to Claim 6,
**characterized in that** dynamically loadable event filters (14) are provided for the purpose of filtering out events (13) which have been classified as insignificant.

8. Data processing system according to one of Claims 1 to 7,
**characterized in that** parameters are recorded for predetermined events and the recorded parameters are used to process the event.

9. Data processing system according to Claim 8,
**characterized in that** an identical finite automaton is provided in conjunction with the event-specific parameters in order to process different events (13).

10. Data processing system according to one of Claims 1 to 9,
**characterized in that** events transmitted to the automaton control component (5) are automatically generated by state sensors (7) which are assigned to hardware components, services or applications.

11. Data processing system according to one of Claims 1 to 10,
**characterized in that** means are provided for the purpose of manually generating events to be transmitted to the automaton control component.

12. Data processing system according to one of Claims 1 to 11,
**characterized in that** the events (13) are transmitted by means of the simple network management protocol.

13. Data processing system according to one of Claims 1 to 12,
**characterized in that** a server farm (1) is formed by components of the data processing system.

14. Data processing system according to Claim 13,
**characterized in that** the automaton control component (5) is arranged on a separate computer unit (2a, 2b) which is not part of the server farm (1).

15. Data processing system according to Claim 14,
**characterized in that** the separate computer unit (2a, 2b) is formed, for its part, by a high-availability cluster.

16. Method for controlling a data processing system having a multiplicity of hardware and software components, in which the components can be controlled by finite automatons,
**characterized in that**
- at least one finite model automaton which is suitable for controlling and monitoring predetermined component types is defined, finite automatons being able to be configured in order to control a component on the basis of the defined model automaton(s) in conjunction with component-specific parameters, and
- the defined model automaton(s) is/are selected and the finite automatons are configured, instantiated or erased by an event-controlled automaton control component (5).

17. Method according to Claim 16,
**characterized in that** the automaton control component (5) is highly available.

18. Method according to Claim 17,
**characterized in that** the automaton control component (5) is implemented on a separate computer unit (2a, 2b).

19. Method according to one of Claims 16 to 18,
**characterized in that** the automaton control component (5) operates using a finite automaton having state nodes (checking...) which allow branching.

## Revendications

1. Système de traitement de données comprenant une pluralité de composants matériels et logiciels, les composants pouvant être commandés par des automates finis, **caractérisé en ce que**
- au moins un modèle d'automate fini est défini, lequel est conçu pour commander et surveiller des types de composants prédéfinis, des automates finis pouvant être configurés pour la commande d'un composant sur la base du ou des modèles d'automate définis en relation avec des paramètres spécifiques au composant, et
- il est prévu un composant de commande d'automate (5) commandé par événement, lequel sélectionne le ou les modèles d'automate définis et est conçu pour la configuration, une instanciation et un effacement des automates finis.

2. Système de traitement de données selon la revendication 1, **caractérisé en ce que** des moyens sont prévus pour cloner les modèles d'automate pour de nouveaux composants matériels ou logiciels.

3. Système de traitement de données selon la revendication 1 ou 2, **caractérisé en ce que** les modèles d'automate contiennent des noeuds spéciaux (Z5, contrôle...) qui permettent une ramification.

4. Système de traitement de données selon la revendication 3, **caractérisé en ce que** les noeuds spéciaux (Z5, contrôle...) sont configurés et disposés dans le modèle d'automate de telle sorte qu'ils exécutent un traitement des défauts.

5. Système de traitement de données selon l'une des revendications 1 à 4, **caractérisé en ce que** le composant de commande d'automate (5) est formé par un automate fini, les changements d'état étant déclenché par les événements reçus (13).

6. Système de traitement de données selon la revendication 5, **caractérisé en ce que** le composant de commande d'automate (5) contient des noeuds spéciaux qui permettent une ramification.

7. Système de traitement de données selon la revendication 6, **caractérisé en ce que** sont prévus des filtres d'événement (14) à chargement dynamique pour éliminer par filtrage les événements (13) classés insignifiants.

8. Système de traitement de données selon l'une des revendications 1 à 7, **caractérisé en ce que** des paramètres sont enregistrés pour des événements prédéfinis et les paramètres enregistrés sont utilisés pour le traitement de l'événement.

9. Système de traitement de données selon la revendication 8, **caractérisé en ce qu'**un même automate fini est prévu en combinaison avec les paramètres spécifiques à un événement pour le traitement de différents événements (13).

10. Système de traitement de données selon l'une des revendications 1 à 9, **caractérisé en ce que** les événements envoyés au composant de commande d'automate (5) sont générés automatiquement par des capteurs d'état (7) qui sont affectés à des composants matériels, des services ou des applications.

11. Système de traitement de données selon l'une des revendications 1 à 10, **caractérisé en ce que** des moyens sont prévus pour générer manuellement les événements à envoyer au composant de commande d'automate.

12. Système de traitement de données selon l'une des revendications 1 à 11, **caractérisé en ce que** les événements (13) sont communiqués au moyen du protocole SNMP (Simple Network Management Protocol).

13. Système de traitement de données selon l'une des revendications 1 à 12, **caractérisé en ce qu'**un parc de serveurs (1) est formé par les composants du système de traitement de données.

14. Système de traitement de données selon la revendication 13, **caractérisé en ce que** le composant de commande d'automate (5) est disposé sur une unité de calcul séparée (2a, 2b) qui ne fait pas partie du parc de serveurs (1).

15. Système de traitement de données selon la revendication 14, **caractérisé en ce que** l'unité de calcul séparée (2a, 2b) est de son côté formée par une grappe à haut niveau de disponibilité.

16. Procédé de commande d'un système de traitement de données comprenant une pluralité de composants matériels et logiciels, les composants pouvant être commandés par des automates finis, **caractérisé en ce que**
- au moins un modèle d'automate fini est défini, lequel est conçu pour commander et surveiller des types de composants prédéfinis, des automates finis pouvant être configurés pour la commande d'un composant sur la base du ou des modèles d'automate définis en relation avec des paramètres spécifiques au composant, et
- le ou les modèles d'automate définis sont sélectionnés par un composant de commande d'automate (5) commandé par événement, lequel configure, instancie et efface les automates finis.

17. Procédé selon la revendication 16, **caractérisé en ce que** le composant de commande d'automate (5) est réalisé avec un haut niveau de disponibilité.

18. Procédé selon la revendication 17, **caractérisé en ce que** le composant de commande d'automate (5) est réalisé sur une unité de calcul séparée (2a, 2b).

19. Procédé selon l'une des revendications 16 à 18, **caractérisé en ce que** le composant de commande d'automate (5) fonctionne au moyen d'un automate fini qui possède des noeuds d'état (contrôle...) qui permettent une ramification.
